# EUROPEAN PATENT SPECIFICATION

(11) **EP 4 480 310 B1**
(45) Date of publication and mention of the grant of the patent: **26.11.2025**
(21) Application number: 24152598.9
(22) Date of filing: 18.01.2024
(51) Int. Cl.: A01M 1/20, A01M 29/12, A01N 25/08, A01N 25/18, A01N 25/34, A01N 53/00, A01P 17/00

(54) **COMPOSITE MULTI-EFFECT MOSQUITO PREVENTION AND CONTROL APPARATUS**
MULTIEFFEKT-VERBUNDMÜCKENPRÄVENTIONS- UND -STEUERUNGSVORRICHTUNG
APPAREIL COMPOSITE DE PRÉVENTION ET DE LUTTE CONTRE LES MOUSTIQUES À EFFETS MULTIPLES

(30) Priority: 20.06.2023 CN 202310740737
(43) Date of publication of application: 25.12.2024
(73) Proprietor: Li, Wenjie, Guangzhou Guangdong (CN)
(72) Inventor: LI, Wenjie, Guangzhou (CN)
(74) Representative: Zaboliene, Reda

(56) References cited:
- EP-B1- 1 313 516
- EP-B1- 2 480 259
- CN-U- 214 962 211
- CN-U- 216 058 913
- US-A1- 2020 305 407
- US-B1- 11 612 161

## Description

### CROSS-REFERENCE TO RELATED APPLICATIONS

This application claims priority to Chinese Patent Application No. 202310740737.6, filed on June 20, 2023.

### TECHNICAL FIELD

The present application relates to the technical field of mosquito prevention and control, in particular to a composite multi-effect mosquito prevention and control apparatus.

### BACKGROUND

The problem of mosquito repelling is one of problems that may not be ignored in people's daily life. An electric heating mosquito repelling device used in combination with drugs is one of common mosquito prevention and control devices. In existing technologies, the electric heating mosquito repelling device is unusually provided with only one heating zone and suitable for the use in combination with a drug with a specific component. However, for drugs commonly used for mosquito repelling and mosquito killing, various components therein have different optimal working temperatures, due to its single heating zone, it may only rely on one of the mosquito repelling drug and the mosquito killing drug to play a separate role in repelling or killing mosquitoes at the same time, and other drugs in the drug may only be used in small quantities as auxiliary drugs because they are not at the optimal working temperatures, thus the combined effect of the drugs with different types and functions in repelling and killing the mosquitoes may not be achieved.

US11612161B1 discloses a dual-purpose mosquito repeller for a mosquito-repellent incense tablet and a mosquito-repellent incense liquid.

EP2480259B1 discloses methods of emitting a volatile material from a diffuser.

CN216058913U discloses a multi-gear mosquito repelling device.

US2020/305407A discloses a mosouito repeller with good mosquito killing effect.

### SUMMARY

The present application provides a composite multi-effect mosquito prevention and control apparatus, as to solve a problem that electric heating mosquito repelling devices in existing technologies may not achieve the combined effect of drugs with different types and functions in repelling and killing mosquitoes.

In order to achieve the above purpose, the present application adopts the following technical schemes:
a composite multi-effect mosquito prevention and control apparatus, used in combination with a drug for mosquito prevention and control, includes an apparatus housing, the apparatus housing is provided with a first heating zone and a second heating zone for heating the drug, and the drug is detachably installed in the first heating zone and the second heating zone;
the drug includes a first drug and a second drug, the first drug is installed in the first heating zone, and the first drug contains pyrethroid; and the second drug is installed in the second heating zone, the second drug contains a repellent agent, and the repellent agent contains one or more of picaridin, ethyl butylacetylaminopropionate, diethyltoluamide (DEET), and methyl nonylketone.

Further, a first information display area and a second information display area are respectively arranged below the first heating zone and the second heating zone on the apparatus housing; and
the first information display area is capable of displaying the temperature and present time of the first heating zone, and the second information display area is capable of displaying the temperature and present time of the second heating zone.

Further, the first information display area and the second information display area are each provided with a display screen or a plurality of indicator lights.

Further, the working temperature of the second heating zone is greater than 40°C and less than 120°C.

Further, the apparatus housing is further provided with a human-machine interaction area, and the human-machine interaction area is used to control a switch of the composite multi-effect mosquito prevention and control apparatus and adjust the temperatures of the first heating zone and the second heating zone.

Further, the first heating zone and the second heating zone are both provided with a multi-level temperature gear, the human-machine interaction area is provided with a plurality of adjustment buttons, and the human-machine interaction area may adjust the temperature gears of the first heating zone and the second heating zone.

Further, the second drug installed in the second heating zone is gel-like or paste-like, which is formed by mixing the repellent agent and a carrier.

Further, the second drug installed in the second heating zone is tablet-like, which is formed by mixing the repellent agent and a coating agent, and pressing after drying.

Further, the second heating zone is provided with an installation groove for installing the second drug.

Further, the second drug installed in the second heating zone is prepared by an adsorbent material carrying the repellent agent.

The beneficial effects of the present application are as follows.

The present application heats the drug containing different main acting agents according to its optimal working temperature by setting the first heating zone and the second heating zone with different temperature ranges, so that the apparatus of the present application simultaneously diffuses different mosquito prevention and control agents at the different optimal working temperatures, to achieve the composite multi-effect mosquito prevention and control effect.

### BRIEF DESCRIPTION OF THE DRAWINGS

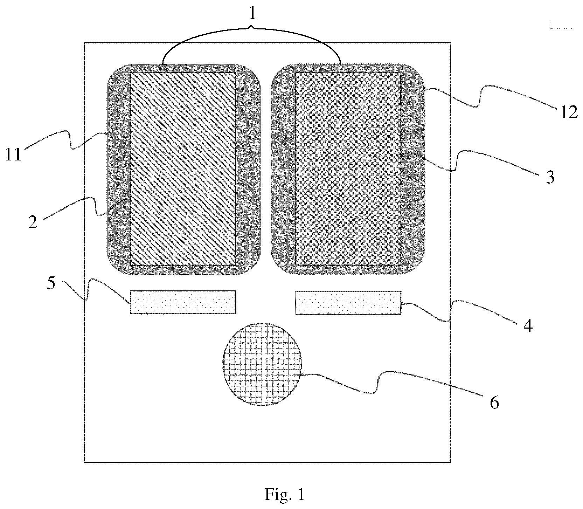

Fig. 1 is an overall schematic diagram of a composite multi-effect mosquito prevention and control apparatus.

### DETAILED DESCRIPTION OF THE EMBODIMENTS

In order to make purposes, technical schemes, and advantages of the present application clearer, the technical schemes of the present application are further clearly and completely described below in combination with embodiments of the present application. It should be noted that the embodiments described are only a part of the embodiments of the present application, not all of the embodiments. Based on the embodiments in the present application, all other embodiments obtained by those of ordinary skill in the art without creative labor shall fall within the scope of protection of the present application.

It should be noted that if a directional indication (such as up, down, left, right, front, back, top, bottom, inside, outside, vertical, horizontal, longitudinal, counterclockwise, clockwise, circumferential, radial, and axial) is involved in the embodiments of the present application, the directional indication is only used to explain a relative position relationship, a motion situation and the like between various components in a specific posture (as shown in the drawings). If the specific posture is changed, the directional indication is also changed accordingly with it.

The term "and/or" in the embodiments of the present application is only a description of an association relationship of associated objects, it is indicated that there may be three types of relationships, for example, A and/or B, it may indicate: the existence of A alone, the existence of A and B simultaneously, and the existence of B alone.

The terms "first" and "second" in the embodiments of the present application are only used for descriptive purposes and may not be understood as indicating or implying the relative importance or implying the quantity of technical features indicated. Therefore, features limited to "first" and "second" may explicitly or implicitly include at least one of these features. In the description of the present application, the terms "including" and "having" and any variations thereof are intended to cover non-exclusive inclusion. For example, a system, a product, or a device that contains a series of components or units is not limited to the listed components or units, but optionally includes unlisted components or units, or optionally includes other components or units inherent to these products or devices. In the description of the present application, "plurality" means at least two, for example two and three, unless otherwise specified.

The reference to "embodiments" in this article means that specific features, structures, or characteristics described in combination with the embodiments may be contained in at least one embodiment of the present application. The phrase appearing in various positions in the description does not necessarily refer to the same embodiment, nor is it an independent or alternative embodiment that is mutually exclusive with other embodiments. Those skilled in the art explicitly and implicitly understand that the embodiments described in this article may be combined with other embodiments.

As shown in Fig. 1, the composite multi-effect mosquito prevention and control apparatus of the present application mainly includes an apparatus housing, and the apparatus housing is provided with a first heating zone 2 and a second heating zone 3 which are used to heat a tablet-like drug 1; a first information display area 4 and a second information display area 5 are respectively arranged below the first heating zone 2 and the second heating zone 3, and the first information display area 4 and the second information display area 5 are each provided with a plurality of indicator lights or a display screen which is used to display information such as temperature and time of the first heating zone 2 and the second heating zone 3 respectively.

Below the first information display area 4 and the second information display area 5, a human-machine interaction area 6 is arranged, and a plurality of buttons is arranged in the human-machine interaction area 6, as to control a switch of the apparatus and a specific temperature gear.

The drug 1 includes a first drug 11 and a second drug 12, and the first drug 11 and the second drug 12 are both in the form of tablet-like, gel-like or paste-like; the first drug 11 is installed in the first heating zone 2, and the first drug contains pyrethroid; and the second drug 12 is installed in the second heating zone 3, and the second drug 12 contains a repellent agent.

The first heating zone 2 and the second heating zone 3 are provided with an installation groove to fasten the drug (namely the first drug 11 and the second drug 12). The agents contained in the drug of the present application mainly include the pyrethroid drug that has a mosquito killing effect, and the repellent agent that has a mosquito repelling effect, including picaridin (also known as icaridin), ethyl butylacetylaminopropionate (also known as BAAPE, mosquito repellents, scientific name: 3-(N-acetyl-N-butyl)aminopropionic acid ethyl ester) , DEET, and methyl nonylketone.

In order to achieve the composite mosquito prevention and control effect, in the present application, the main component of the first drug 11 adapted to the first heating zone 2 is set as the pyrethroid, and the main component of the second drug 12 adapted to the second heating zone 3 is set as the repellent agent (such as the picaridin, ethyl butylacetylaminopropionate, DEET, and methyl nonylketone). The working temperature of the second heating zone 3 is set to be greater than 40°C and less than 120 °C, to achieve the better diffusion effect of the repellent agent. In addition, the first heating zone 2 and the second heating zone 3 are both provided with a plurality of temperature gears, and the gears are adjusted by operating in the human-machine interaction area 6.

For the second drug 12 of the second heating zone 3, in an embodiment of the present application, the second drug 12 of the second heating zone 3 is in the form of gel-like, and is prepared by the following method:
Step 1: 0.35wt% carbomer, 4wt% butanediol, and 59.66wt% sterile water are mixed, it is continuously stirred uniformly, then the temperature is raised to 85°C, the temperature is kept for 30 min, and it is homogenized for 5 min, to obtain initial solution;
Step 2: the initial solution is cooled to 50°C, 0.18wt% aminomethyl propanol is added, and it is stirred uniformly, to obtain intermediate solution; and
Step 3: 15wt% ethanol, 20wt% repellent agent, 0.3wt% triethyl citrate, 0.05wt% glycerol octanoate and 0.46wt% preservative are added into the intermediate solution, and it is stirred uniformly, to obtain the gel-like second drug.

In another embodiment of the present application, the second drug 12 in the second heating zone 3 is in the form of paste-like, and is prepared by the following method:
Step 1: 10∼15 g of collagen powder is weighed and added to 200~300 g of deionized water, it is stirred and mixed uniformly to obtain collagen solution, 6~8 g of cellulose, 3~5 g of glycerol, 1~2 g of stearic acid, and 1~2 g of sodium dodecyl sulfonate are sequentially added to the collagen solution, the pH value is adjusted to 10∼11 with 15wt% sodium hydroxide solution, it is heated to 85~88°C after being adjusted, it is stirred and mixed for 50∼60 min, and after being stirred, it is cooled to a room temperature, to obtain viscous solution for standby;
Step 2: an organic curing agent (such as Vaseline and Peruvian balsam) is kept in a water bath at 70~80°C for 0.5 h, to form solution; and repellent agent liquid is added, it is stirred for 3-5 min, refrigerated and solidifies at 0~5°C for 3-5 h, and after being solidified, it is removed from a container, to obtain a solid paste; and
Step 3: the above solid paste is added to the standby viscous solution prepared in Step 1 in a mass ratio of 1:5; and it is stirred for 3~5 min, and dried naturally for 6~8 h, to obtain the repellent agent ointment.

In another embodiment of the present application, the second drug 12 in the second heating zone 3 is prepared by an adsorbent material (such as flexible non-woven fabric) carrying the repellent agent.

In another embodiment of the present application, the second drug 12 in the second heating zone 3 is in the form of tablet-like, and it may be formed by mixing the repellent agent and a coating agent agent (such as crown ether, cyclodextrin, calixarene, calixpyrrole, calixazole, cucurbituril, and pillararene) and drying to form a solid, and then pressing into a tablet. In this embodiment, the second heating zone 3 may be provided with an installation groove for accommodating the second drug 12, thereby the second drug 12 is installed in the second heating zone 3.

The present application heats the drug containing different main acting agents according to its optimal working temperature by setting the first heating zone 2 and the second heating zone 3 with different temperature ranges, so that the apparatus of the present application may simultaneously diffuse mosquito prevention and control agents with different types and functions at the different optimal working temperatures, to achieve the composite multi-effect mosquito prevention and control effect.

The above embodiments only express implementation modes of the present application, and its description is more specific and detailed, but may not be understood as limitations on the scope of the present Therefore, the scope of protection of the present application should be based on the appended claims.

## Claims

1. A composite multi-effect mosquito prevention and control apparatus, used in combination with a drug for mosquito prevention and control, comprising an apparatus housing, wherein the apparatus housing is provided with a first heating zone (2) and a second heating zone (3) for heating the drug, and the drug is detachably installed in the first heating zone (2) and the second heating zone (3);
the drug comprises a first drug (11) and a second drug (12), the first drug (11) is installed in the first heating zone (2), and the first drug (11) contains pyrethroid; and the second drug (12) is installed in the second heating zone (3), the second drug (12) contains a repellent agent, and the repellent agent contains one or more of picaridin, ethyl butylacetylaminopropionate, diethyltoluamide (DEET), and methyl nonylketone;
wherein a first information display area (4) and a second information display area (5) are respectively arranged below the first heating zone (2) and the second heating zone (3) on the apparatus housing; and
the first information display area (4) is capable of displaying a temperature and a present time of the first heating zone (2), and the second information display area (5) is capable of displaying a temperature and a present time of the second heating zone (3);
wherein the first information display area (4) and the second information display area (5) are each provided with a display screen or a plurality of indicator lights;
wherein a working temperature of the second heating zone (3) is greater than 40°C and less than 120°C; wherein the first heating zone (2) and the second heating zone (3) are configured to heat the drug with different temperature ranges, the drug contains different main acting agents, so that the apparatus diffuses mosquito prevention and control agents with different types and functions at the different temperature ranges, to achieve the composite multi-effect mosquito prevention and control effect.

2. The composite multi-effect mosquito prevention and control apparatus according to claim 1, wherein the apparatus housing is further provided with a human-machine interaction area (6), and the human-machine interaction area (6) is configured to control a switch of the composite multi-effect mosquito prevention and control apparatus and adjust temperatures of the first heating zone (2) and the second heating zone (3).

3. The composite multi-effect mosquito prevention and control apparatus according to claim 2, wherein the first heating zone (2) and the second heating zone (3) are both provided with a multi-level temperature gear, the human-machine interaction area (6) is provided with a plurality of adjustment buttons, and the human-machine interaction area (6) is capable of adjusting the temperature gears of the first heating zone (2) and the second heating zone (3).

4. The composite multi-effect mosquito prevention and control apparatus according to claim 1, wherein the second drug (12) installed in the second heating zone (3) is gel-like or paste-like, which is formed by mixing the repellent agent and a carrier.

5. The composite multi-effect mosquito prevention and control apparatus according to claim 1, wherein the second drug (12) installed in the second heating zone (3) is tablet-like that is pressed after mixing and drying, the second drug (12) is formed by mixing the repellent agent and a coating agent.

6. The composite multi-effect mosquito prevention and control apparatus according to claim 5, wherein the second heating zone (3) is provided with an installation groove for installing the second drug (12).

7. The composite multi-effect mosquito prevention and control apparatus according to claim 1, wherein the second drug (12) installed in the second heating zone (3) consists of an adsorbent material carrying the repellent agent.

## Patentansprüche

1. Zusammengesetzte mehrfachwirkende Mückenabwehr- und - bekämpfungsvorrichtung, die in Kombination mit einem Arzneimittel zur Mückenabwehr und -bekämpfung verwendet wird, umfassend ein Vorrichtungsgehäuse, wobei das Vorrichtungsgehäuse mit einer ersten Heizzone (2) und einer zweiten Heizzone (3) zum Erwärmen des Arzneimittels ausgestattet ist und das Arzneimittel lösbar in der ersten Heizzone (2) und der zweiten Heizzone (3) installiert ist;
das Arzneimittel ein erstes Arzneimittel (11) und ein zweites Arzneimittel (12) umfasst, wobei das erste Arzneimittel (11) in der ersten Heizzone (2) installiert ist und das erste Arzneimittel (11) Pyrethroid enthält; und wobei das zweite Arzneimittel (12) in der zweiten Heizzone (3) installiert ist, das zweite Arzneimittel (12) ein Repellent enthält und das Repellent eines oder mehrere von Icaridin, Ethylbutylacetylaminopropionat, Diethyltoluamid (DEET) und Methylnonylketon enthält;
wobei ein erster Informationsanzeigebereich (4) und ein zweiter Informationsanzeigebereich (5) jeweils unter der ersten Heizzone (2) und der zweiten Heizzone (3) an dem Gehäuse angeordnet sind; und
wobei der erste Informationsanzeigebereich (4) dazu eingerichtet ist, eine Temperatur und eine aktuelle Zeit der ersten Heizzone (2) anzuzeigen, und der zweite Informationsanzeigebereich (5) dazu eingerichtet ist, eine Temperatur und eine aktuelle Zeit der zweiten Heizzone (3) anzuzeigen;
wobei der erste Informationsanzeigebereich (4) und der zweite Informationsanzeigebereich (5) jeweils mit einem Anzeigebildschirm oder einer Vielzahl von Anzeigeleuchten versehen sind;
wobei eine Arbeitstemperatur der zweiten Heizzone (3) größer als 40°C und kleiner als 120°C ist;
wobei die erste Heizzone (2) und die zweite Heizzone (3) konfiguriert sind, das Arzneimittel in unterschiedlichen Temperaturbereichen zu erhitzen, wobei das Arzneimittel verschiedene Hauptwirkstoffe enthält, sodass die Vorrichtung Mückenabwehr- und -bekämpfungsmittel unterschiedlicher Typen und Funktionen in den verschiedenen Temperaturbereichen diffundiert, um den mehrfach zusammengesetzten Mückenabwehr- und -bekämpfungseffekt zu erzielen.

2. Zusammengesetzte mehrfachwirkende Mückenabwehr- und -bekämpfungsvorrichtung nach Anspruch 1, wobei das Vorrichtungsgehäuse ferner mit einem Mensch-Maschine-Interaktionsbereich (6) versehen ist, und wobei der Mensch-Maschine-Interaktionsbereich (6) dazu ausgelegt ist, einen Schalter der zusammengesetzten mehrfachwirkenden Mückenabwehr- und -bekämpfungsvorrichtung zu steuern und Temperaturen der ersten Heizzone (2) und der zweiten Heizzone (3) zu regulieren.

3. Zusammengesetzte mehrfachwirkende Mückenabwehr- und - bekämpfungsvorrichtung nach Anspruch 2, wobei die erste Heizzone (2) und die zweite Heizzone (3) beide mit einem mehrstufigen Temperaturgang versehen sind, der Mensch-Maschine-Interaktionsbereich (6) mit einer Vielzahl von Einstelltasten versehen ist und der Mensch-Maschine-Interaktionsbereich (6) dazu eingerichtet ist, die Temperaturgänge der ersten Heizzone (2) und der zweiten Heizzone (3) einzustellen.

4. Zusammengesetzte mehrfachwirkende Mückenabwehr- und - bekämpfungsvorrichtung nach Anspruch 1,wobei das in der zweiten Heizzone (3) installierte zweite Arzneimittel (12) gelartig oder pastenartig ist, das durch Mischung des Repellents und eines Trägers gebildet wird.

5. Zusammengesetzte mehrfachwirkende Mückenabwehr- und - bekämpfungsvorrichtung nach Anspruch 1, wobei das in der zweiten Heizzone (3) installierte zweite Arzneimittel (12) tablettenartig ist, das nach Mischen und Trocknen gepresst wird, wobei das zweite Arzneimittel (12) durch Mischen des Repellents und eines Überzugsmittels gebildet wird.

6. Zusammengesetzte mehrfachwirkende Mückenabwehr- und - bekämpfungsvorrichtung nach Anspruch 5, wobei die zweite Heizzone (3) mit einer Installationsnut zum Installieren des zweiten Arzneimittels (12) versehen ist.

7. Zusammengesetzte mehrfachwirkende Mückenabwehr- und - bekämpfungsvorrichtung nach Anspruch 1, wobei das in der zweiten Heizzone (3) installierte zweite Arzneimittel (12) aus einem adsorbierenden Material besteht, das das Repellent trägt.

## Revendications

1. Appareil composite de prévention et de lutte contre les moustiques à effets multiples, utilisé en combinaison avec un médicament pour la prévention et la lutte contre les moustiques, comprenant un boîtier d'appareil, dans lequel le boîtier d'appareil est pourvu d'une première zone de chauffage (2) et d'une seconde zone de chauffage (3) destinées à chauffer le médicament, et le médicament est installé de manière amovible dans la première zone de chauffage (2) et la seconde zone de chauffage (3) ;
le médicament comprend un premier médicament (11) et un second médicament (12), le premier médicament (11) est installé dans la première zone de chauffage (2), et le premier médicament (11) contient du pyréthroïde ; et le second médicament (12) est installé dans la seconde zone de chauffage (3), le second médicament (12) contient un agent répulsif, et l'agent répulsif contient un ou plusieurs parmi de la picaridine, de l'éthylbutylacétylaminopropionate, du diéthyltoluamide (DEET) et du méthylnonylcétone ;
dans lequel une première zone d'affichage d'informations (4) et une seconde zone d'affichage d'informations (5) sont respectivement disposées au-dessous de la première zone de chauffage (2) et de la seconde zone de chauffage (3) sur le boîtier d'appareil ; et
la première zone d'affichage d'informations (4) peut afficher une température et l'heure actuelle de la première zone de chauffage (2), et la seconde zone d'affichage d'informations (5) peut afficher une température et l'heure actuelle de la seconde zone de chauffage (3) ;
dans lequel la première zone d'affichage d'informations (4) et la seconde zone d'affichage d'informations (5) sont chacune pourvues d'un écran d'affichage ou d'une pluralité de voyants lumineux ;
dans lequel la température de fonctionnement de la seconde zone de chauffage (3) est supérieure à 40 °C et inférieure à 120 °C ; dans lequel
la première zone de chauffage (2) et la seconde zone de chauffage (3) sont configurées pour chauffer le médicament à différentes plages de température, le médicament contenant différents agents d'action principaux, de sorte que l'appareil diffuse des agents de prévention et de lutte contre les moustiques de différents types et fonctions à différentes plages de température, afin d'obtenir un effet composite de prévention et de lutte contre les moustiques à effets multiples.

2. Appareil composite de prévention et de lutte contre les moustiques à effets multiples selon la revendication 1, dans lequel le boîtier d'appareil est en outre pourvu d'une zone d'interaction homme-machine (6), et la zone d'interaction homme-machine (6) est configurée pour commander un interrupteur de l'appareil composite de prévention et de lutte contre les moustiques à effets multiples et pour régler des températures de la première zone de chauffage (2) et de la seconde zone de chauffage (3).

3. Appareil composite de prévention et de lutte contre les moustiques à effets multiples selon la revendication 2, dans lequel la première zone de chauffage (2) et la seconde zone de chauffage (3) sont toutes deux pourvues d'un réglage de température à plusieurs niveaux, la zone d'interaction homme-machine (6) est pourvue d'une pluralité de boutons de réglage, et la zone d'interaction homme-machine (6) peut régler les réglages de température de la première zone de chauffage (2) et de la seconde zone de chauffage (3).

4. Appareil composite de prévention et de lutte contre les moustiques à effets multiples selon la revendication 1, dans lequel le second médicament (12) installé dans la seconde zone de chauffage (3) est de type gel ou pâte, qui est formé en mélangeant l'agent répulsif et un support.

5. Appareil composite de prévention et de lutte contre les moustiques à effets multiples selon la revendication 1, dans lequel le second médicament (12) installé dans la seconde zone de chauffage (3) est de type comprimé qui est pressé après mélange et séchage, le second médicament (12) est formé en mélangeant l'agent répulsif et un agent d'enrobage.

6. Appareil composite de prévention et de lutte contre les moustiques à effets multiples selon la revendication 5, dans lequel la seconde zone de chauffage (3) est pourvue d'une rainure d'installation destinée à installer le second médicament (12).

7. Appareil composite de prévention et de lutte contre les moustiques à effets multiples selon la revendication 1, dans lequel le second médicament (12) installé dans la seconde zone de chauffage (3) est constitué d'un matériau adsorbant portant l'agent répulsif.
